Europäisches Patentamt

European Patent Office

Office européen des brevets

(11) Numéro de publication : **0 571 292 A1**

## (12) DEMANDE DE BREVET EUROPEEN

(21) Numéro de dépôt : **93401307.9**

(22) Date de dépôt : **19.05.93**

(51) Int. Cl.⁵ : **C04B 28/32,** B09B 3/00,
// (C04B28/32, 14:02, 18:04)

(30) Priorité : **20.05.92 FR 9206387**

(43) Date de publication de la demande :
**24.11.93 Bulletin 93/47**

(84) Etats contractants désignés :
**AT BE CH DE DK ES FR GB GR IE IT LI LU MC
NL PT SE**

(71) Demandeur : **ECOLE CENTRALE DE NANTES
1, rue de la Noe
F-44072 Nantes Cédex 03 (FR)**

(72) Inventeur : **Bizeul, Daniel
20, avenue de l'Aumonerie
F-44000 Nantes (FR)**
Inventeur : **Bizeul, David
20, avenue de l'Aumonerie
F-44000 Nantes (FR)**

(74) Mandataire : **Phélip, Bruno et al
c/o Cabinet Harlé & Phélip 21, rue de La
Rochefoucauld
F-75009 Paris (FR)**

(54) **Procédé de réduction de nocivité de déchets particulaires.**

(57)     Le procédé d'inertage de déchets ou résidus ultimes est caractérisé par le fait qu'il consiste à mélanger une solution de chlorure de magnésium avec l'oxyde de magnésium avant une phase de mélange avec les déchets ou résidus ultimes, le produit final, avant solidification, ayant un pH compris entre 5 et 7.

La solution de chlorure de magnésium utilisée est titrée entre 20 et 40 % ; l'oxyde de magnésium est présent dans des quantités comprises entre 6 et 33 % de la masse finale du produit.

On obtient une substance pâteuse qui se solidifie sans perte de masse sous quelques heures, à la température ambiante.

Ce procédé d'inertage ne nécessite qu'un faible apport énergétique ; il peut être réalisé à la température ambiante, par exemple pour le traitement des résidus de lavage des fumées d'incinérateurs.

EP 0 571 292 A1

Jouve, 18, rue Saint-Denis, 75001 PARIS

L'invention concerne un procédé de réduction de la nocivité des déchets et résidus ultimes particulaires par inertage à basse température et faible énergie.

L'industrialisation et l'urbanisation entraînent une accélération de la production de résidus à risque de pollution. Les résidus ultimes qui se présentent sous forme particulaire, de faible dimension, constituent un risque de pollution par leur mobilité et leur agressivité mécanique, notamment sur les tissus cellulaires. Cette pollution est aggravée par la teneur en métaux lourds qui ont échappé aux divers traitements. Le critère majeur de la toxicité des résidus ultimes particulaires est la taille de la particule, puis ses degrés de liberté, et enfin sa concentration.

On connaît de nombreux procédés qui permettent de réduire ou de recycler des composants présents dans des déchets solides qui contiennent des éléments réputés nocifs, soit en raison de leur état, notamment taille, soit en raison des risques de transformation ultérieure, et, dans tous les cas, en raison de leur mobilité. Or, en dessous de certaines concentrations, les rendements des techniques ne justifient plus le traitement. Le déchet devient alors un résidu ultime contenant des éléments toxiques et nocifs ; ces éléments rendent nécessaire, soit le stockage contrôlé, c'est le cas notamment des résidus ultimes de lavage des fumées d'unités d'incinération, soit l'inertage par des procédés à forte concentration d'énergie, telles que les torches à plasma pour la vitrification.

L'invention propose de supprimer la mobilité des éléments nocifs des déchets ou résidus ultimes particulaires en les insérant en tant que charges capables de modifier ou non la cinétique des réactions chimiques lors de l'élaboration de ciment magnésien. Cette élaboration de ciment magnésien s'effectue selon l'une des deux réactions de cristallisation a température ambiante de l'oxychlorure basique de magnésium suivantes, décrites dans des travaux de chimie minérale, notamment de DAVIS (Chem. news. 25-258, 1872) :

$$5MgO + 13H_2O + MgCl_2 \rightarrow MgCl_2. 5Mg(OH)_2.8H_2O$$
$$3MgO + 11H_2O + MgCl_2 \rightarrow MgCl_2.3Mg(OH)_2.8H_2O$$

Ces oxychlorures sont stables et cristallisés.

Dans le document FR-A-326 564, on a proposé de fabriquer des plaques, des feuilles de placage ou des briques par un procédé similaire, faisant intervenir des déchets, une solution de chlorure de magnésium et de la magnésite calcinée. Le procédé utilisé est cependant assez empirique ; il est onéreux à mettre en oeuvre et ne garantit pas l'obtention de résultats constants, notamment en fonction du type et de la qualité du déchet traité.

L'invention proposée se caractérise, pour le traitement des déchets ou résidus ultimes particulaires, par un malaxage de ces déchets ou résidus ultimes avec le mélange préalable d'oxyde de magnésium et de chlorure de magnésium, de telle façon que l'addition des déchets ou résidus ultimes ne perturbe pas le sens de la réaction de cristallisation, notamment lorsque le résidu comporte des éléments actifs comme des composés chlorés ou tout autre élément susceptible d'intervenir.

Le mélange préalable d'oxyde de magnésium et de chlorure de magnésium permet d'initier la réaction de cristallisation. De plus, les proportions et quantités des différents constituants sont adaptées pour que le pH de la pâte finale, avant solidification, soit compris entre 5 et 7, de telle sorte que ladite réaction se poursuive dans le sens désiré.

La solution de chlorure de magnésium utilisée est de préférence titrée entre 20 et 40 % en chlorure. L'oxyde de magnésium se présente sous la forme de poudre ; il est ajouté dans des quantités comprises entre 6 et 33 % de la masse finale obtenue.

D'une manière générale, le procédé selon l'invention consiste :
- a identifier le déchet ou résidu ultime que l'on désire inerter (ou le mélange de déchets et/ou résidus ultimes) dans sa nature, qualité, quantité et pH,
- à déterminer la quantité d'oxyde de magnésium minimale adaptée au déchet ou résidu ultime identifié, de telle sorte que le résultat du malaxage final conduise à un pH acide, compris entre 5 et 7,
- à déterminer la quantité de chlorure de magnésium adaptée au rapport massique des réactions de cristallisation en jeu,
- à mélanger le chlorure de magnésium en solution avec l'oxyde de magnésium,
- à malaxer le mélange magnésien avec les déchets ou résidus ultimes.

Les déchets ou résidus ultimes à inerter ayant généralement une nature acide ou basique assez marquée, on veillera à ce qu'ils soient présents dans une proportion maximale de 1/3 de la masse globale déchets-MgO-Mgcl$_2$, ceci dans le but de ne pas perturber le sens de la réaction de cristallisation.

Si cela s'avère nécessaire, notamment dans le cas de résidus sous forme particulaire de faible taille et de faible densité, l'homogénéité du mélange est facilitée par une densification obtenue par l'adjonction de charges inertes vis à vis des composés magnésiens. Ces charges inertes sont constituées de particules de taille et de densité supérieures à celles des déchets ; on peut par exemple utiliser des silices, des sables ou des graviers. Cette adjonction favorise l'homogénéisation de la pâte ; la ou les charges inertes peuvent être utilisées également pour renforcer le matériau ou assurer son identification.

La teneur en charges inertes autres que les résidus ne peut pas excéder 75 % de la masse totale des produits mis en oeuvre dans le procédé.

La substance pâteuse ainsi obtenue se solidifie de manière irréversible, sans perte de masse, sous quelques heures à la température ambiante. Cette solidification aboutit à un matériau ayant au minimum la résistance à la compression d'un béton hydraulique normal (de l'ordre de 25 Mpa).

L'invention propose un procédé qui se caractérise par un faible apport énergétique pouvant, par exemple, être réalisé à la température ambiante pour inerter, sous forme solide, des déchets et/ou résidus ultimes se présentant à l'état particulaire, comme les résidus ultimes de lavage des fumées d'incinérateurs qui contiennent plus particulièrement du calcium et du chlore, ainsi que des traces de métaux lourds.

L'invention proposée se caractérise également par la possibilité d'utiliser de faibles teneurs en oxyde de magnésium, de l'ordre de 6 % de la masse totale du produit final.

L'invention proposée est applicable à des déchets ou résidus ultimes d'origine minérale, animale ou végétale. Elle est adaptée pour traiter des déchets ou des résidus ultimes pouvant avoir plusieurs origines, contenant des métaux et des oxydes ainsi que des chlorures, bromures, fluorures et iodures métalliques ; dans ce dernier cas, on choisit de préférence des déchets ou résidus ultimes qui coopèrent entre eux et qui sont adaptés pour ne pas modifier le sens des réactions de cristallisation.

L'invention sera encore illustrée par les exemples suivants qui décrivent quelques procédures d'inertage conformes à son principe, donnés uniquement à titre indicatif. A noter que les quantités indiquées représentent uniquement un ordre de grandeur utilisable notamment pour évaluer les proportions des produits dans le mélange. Bien entendu, ces quantités seront, le cas échéant, adaptées à des productions industrielles.

Exemple 1 : Inertage de résidus d'incinération d'ordures ménagères.

300 grammes d'une solution de chlorure de magnésium à 30 % sont mélangés avec 300 grammes d'oxyde de magnésium pendant 3 minutes. 165 grammes de résidus d'incinération d'ordures ménagères de densité apparente comprise entre 0,5 et 0,7, comprenant pour l'essentiel des fines silices (de taille de l'ordre de quelques micromètres), des oxydes et sels métalliques, notamment des chlorures de calcium, ainsi que des traces de sulfate, ont été malaxés mécaniquement et sont mélangés avec 100 grammes d'eau, 866 grammes de graviers et 768 grammes de sable.

Les deux mélanges sont additionnés et malaxés 5 minutes.

Le produit final est moulé par gravité et laissé à température ambiante (20°C environ).

Résultat :

Le produit est démoulable 4 heures après le malaxage. La masse solide est identique à la somme des masses mises en jeu dans les mélanges. 7 jours après le malaxage, le produit ne perd pas de masse significative après immersion deux heures dans de l'eau maintenue à ébulliton. La résistance à la compression du matériau est supérieure à 40 Mpa ; sa résistance en traction est supérieure à 6 Mpa.

Les propriétés obtenues évoluent avec la composition. Ainsi, en utilisant la même procédure mais en portant la masse de résidus à 330 grammes et celle de graviers à 700 grammes, tout en conservant les mêmes quantités pour les composés magnésiens, les caractéristiques mécaniques sont respectivement divisées par 1,7.

Exemple II : Inertage de résidus particulaires d'usinage de matériaux composites.

300 grammes d'une solution de chlorure de magnésium à 30 % sont mélangés avec 300 grammes d'oxyde de magnésium pendant deux à trois minutes.

100 grammes de résidus particulaires de densité apparente 0,2 provenant des dispositifs d'aspiration de poussières lors de l'usinage au diamant de matériaux composites, comprenant pour l'essentiel des fines particules de fibres de carbone et de verre (de taille inférieure au dixième de micromètre), ainsi que des particules de résine, notamment de résine époxy, ont été malaxés mécaniquement avec 200 grammes de sable marin non lavé constituant une charge passive.

L'ensemble des deux mélanges est malaxé durant 6 minutes puis moulé par gravité et laissé à température ambiante (20°C environ).

Résultat :

Le produit est démoulable 6 heures après le malaxage. La masse solide est identique à la somme des masses mises en jeu dans les mélanges. 9 jours après le malaxage le produit ne perd pas de masse significative après immersion deux heures dans de l'eau maintenue à ébullition.

Exemple III : Inertage de déchets d'origine bio-animale.

100 grammes d'une solution de chlorure de magnésium à 30 % ont été mélangés avec 200 grammes d'oxyde de magnésium pendant 2 à 3 minutes.

100 grammes de gélatine à 30° issue de préparation alimentaire ont été malaxés mécaniquement avec la préparation précédente.

La pâte finale est moulée par gravité et laissée à température ambiante (20°C environ).

Résultat :

Le produit est démoulable quatre heures après le malaxage. La masse solide est identique à la somme des masses mises en jeu dans les mélanges. 9 jours après le malaxage le produit ne perd pas de masse significative après immersion deux heures dans de l'eau à ébullition.

Exemple IV : Inertage composite de déchets d'origine bio-animale et de résidus minéraux.

100 grammes d'une solution de chlorure de magnésium à 30 % et 200 grammes d'oxyde de magnésium ont été malaxés pendant 3 minutes.

150 grammes de résidus d'incinération et 100 grammes de gélatine à 30° issue de préparation alimentaire ont été mélangés mécaniquement pendant une à deux minutes.

Les deux mélanges ont alors été malaxés pendant deux minutes puis moulés par gravité et laissés à température ambiante (20°C environ).

Résultat :

Le produit est démoulable cinq heures après le malaxage. La masse solide est identique à la somme des masses mises en jeu dans les mélanges. 9 jours après le malaxage, le produit ne perd pas de masse significative après immersion deux heures dans de l'eau à ébullition.

En fonction des règles énoncées ci-avant, dans tous les cas, les quantités et proportions de chlorure de magnésium et d'oxyde de magnésium sont adaptées au produit que l'on désire inerter.

On doit également, de préférence, se placer dans des conditions telles que l'on n'ait plus de chlore libre. Ainsi, l'oxyde de magnésium sera présent dans des quantités suffisantes pour neutraliser tous les ions chlore. (l'oxyde de magnésium n'ayant aucune toxicité, son surplus éventuel ne présentera aucun inconvénient).
D'autre part, la quantité d'oxyde de magnésium est également fonction de la proportion intrinsèque d'eau dans le produit à inerter ; pour des raisons de technologie de mélange, plus le résidu est hydraté, plus la quantité d'oxyde de magnésium devra être importante.

Le mélange obtenu peut être moulé par des techniques de gravité, ou sous pression, pour obtenir des blocs solides dont le stockage sera très facile et qui pourront être utilisés notamment à titre de produit final à usage "bâtiment". La cristallisation du ciment peut s'effectuer à l'air ambiant ou être accélérée thermiquement, par micro-ondes par exemple, pour initier la réaction de façon homogène.

La proportion des déchets ou résidus ultimes dans ce genre de matériau peut aller de quelques pour cent à 33 % de la masse finale du produit ; la proportion pourra varier selon la toxicité du déchet ou des résidus ultimes et selon la qualité d'inertage recherchée. Pour des résidus issus d'incinération notamment, des taux de 25 à 35 % conduisent à des résistances à la compression de l'ordre de 22 Mpa et à de bons comportements dans le temps.

Le matériau issu de la filière d'insertion de produits à risque polluants dépendra bien entendu du résidu inséré.

A noter qu'il est également possible de rajouter d'autres constituants à la masse pâteuse, par exemple des colorants, notamment dans le but de déterminer l'origine et/ou la nature des produits inertés.

**Revendications**

**1.-** Procédé d'inertage à basse énergie de déchets ou résidus ultimes d'origine minérale, bio-animale ou végétale, se présentant sous forme particulaire, par un mélange hydraté desdits déchets ou résidus ultimes avec des composés magnésiens, chlorures et oxyde, conduisant à un produit solide, caractérisé en ce qu'il consiste à mélanger une solution de chlorure de magnésium avec l'oxyde de magnésium avant une phase de mélange avec les déchets ou résidus ultimes, les quantités et proportions de ces constituants étant adaptées pour que le produit final, avant solidification, ait un pH compris entre 5 et 7.

**2.-** Procédé selon la revendication 1, caractérisé en ce qu'il consiste à densifier préalablement les déchets ou résidus ultimes par adjonction de charges inertes par rapport aux composés magnésiens utilisés.

**3.-** Procédé selon l'une quelconque des revendications 1 ou 2, caractérisé en ce qu'il consiste à utiliser une solution de chlorure de magnésium titrée entre 20 et 40 % en chlorure.

**4.-** Procédé selon l'une quelconque des revendications 1 à 3, caractérisé en ce qu'il consiste à utiliser de l'oxyde de magnésium dans des quantités comprises entre 6 et 33 % de la masse finale du produit.

**5.-** Procédé selon l'une quelconque des revendications 1 à 4, caractérisé en ce qu'il consiste à utiliser une quantité d'oxyde de magnésium adaptée à la quantité et à la nature des déchets ou des résidus ultimes pour obtenir une pâte finale ayant un pH compris entre 5 et 7, et à utiliser une quantité de chlorure de magnésium adaptée au rapport massique des réactions de cristallisation.

**6.-** Procédé selon l'une quelconque des revendications 1 à 5, caractérisé en ce qu'il consiste à inerter simultanément des déchets et/ou des résidus ultimes d'origine et de nature différentes.

**7.-** Procédé selon l'une quelconque des revendications 1 à 6, caractérisé en ce qu'il consiste à minimiser la quantité d'oxyde de magnésium utilisé.

**8.-** Produit solide obtenu par le procédé selon l'une quelconque des revendications 1 à 7.

**9.-** Produit selon la revendication 8, caractérisé en ce qu'il comprend des déchets ou résidus ultimes dans des proportions inférieures à 33 % de la masse global déchets-MgO-Mgcl$_2$.

Office européen
des brevets

**RAPPORT DE RECHERCHE EUROPEENNE**

Numero de la demande

EP   93 40 1307

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | CHEMICAL ABSTRACTS, vol. 100, no. 24, 11 Juin 1984, Columbus, Ohio, US; abstract no. 196911y, NIHON CEMENT CO. page 309 ; * abrégé * & JP-A-59 018 147 (NIHON CEMENT) | 1,2,6,8 | C04B28/32 B09B3/00 //(C04B28/32, 14:02,18:04) |
| P,X | WO-A-9 218 437 (RAMSEYER) * revendications 1,2,13,14,35,56 * | 1,2,8 | |
| A,D | FR-A-326 564 (J. KLIMSCH ET AL.) * Résumé, point 1 * | 1,8 | |
| A | DATABASE WPI Week 7712, Derwent Publications Ltd., London, GB; & JP-A-52 018 731 (GODO KAGAKU KOGYO) 12 Février 1977 * abrégé * | 1,8 | |
| A | EP-A-0 355 507 (SIEMENS A.G.) * Abrégé * | | |
| A | CHEMICAL ABSTRACTS, vol. 100, no. 8, 20 Février 1984, Columbus, Ohio, US; abstract no. 55983m, P. ZHU ET AL. page 272 ; * abrégé * & HUAXUE SHIJIE vol. 23, no. 5, 1982, CHINA pages 152 – 154 P. ZHU ET AL. | | |
| A | US-A-2 231 123 (D.S. HUBBELL) * revendication * | | |

**DOMAINES TECHNIQUES RECHERCHES (Int. Cl.5)**

C04B

-----

Le présent rapport a été établi pour toutes les revendications

| Lieu de la recherche | Date d'achèvement de la recherche | Examinateur |
|---|---|---|
| LA HAYE | 25 AOUT 1993 | DAELEMAN P.C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P0402)